# EUROPÄISCHE PATENTSCHRIFT

(11) **EP 3 797 072 B1**
(45) Veröffentlichungstag und Bekanntmachung des Hinweises auf die Patenterteilung: **06.12.2023**
(21) Anmeldenummer: 19729628.8
(22) Anmeldetag: 22.05.2019
(51) Int. Cl.: B64D 11/00

(54) **WASSERTROLLEY UND ANSCHLUSSSTATION HIERFÜR FÜR BORDKÜCHE**
WATER CART AND CONNECTION STATION THEREFOR FOR GALLEY
CHARIOT À EAU ET STATION DE RACCORDEMENT DE CUISINE DE BORD POUR CELUI-CI

(30) Priorität: 20.06.2018 DE 102018210022
(43) Veröffentlichungstag der Anmeldung: 31.03.2021
(73) Patentinhaber: Siemens Mobility GmbH, 81739 München (DE)
(72) Erfinder: FROESE, Jürgen, 47807 Krefeld (DE); KEMMERLING, Frank, 41472 Neuss (DE); KOHNEN, Heinrich, 47906 Kempen (DE); NEUMANN, Birgit, 47239 Duisburg (DE); SILBERMANN, Petra, 47053 Duisburg (DE)
(74) Vertreter: Siemens Patent Attorneys
(86) Internationale Anmeldenummer: PCT/EP2019/063218
(87) Internationale Veröffentlichungsnummer: WO 2019/242973

(56) Entgegenhaltungen:
- EP-A1- 2 695 812
- EP-A1- 2 868 243
- DE-A1-102009 021 970
- DE-A1-102015 211 949

## Beschreibung

Die Erfindung betrifft die Ver- und Entsorgung mit und von Wasser in Bordküchen für Verkehrsmittel, etwa Züge, Flugzeuge, Busse oder Schiffe. Beispielsweise in Zügen sind Frisch- und Grauwasserbehälter unterflur, also unterhalb des Fahrgastraumes, montiert. Die Wasserver- und Wasserentsorgung erfolgt über ein entsprechend ausgelegtes Leitungs- und Pumpensystem. Aufgrund der Montage unterflur ist eine zusätzliche Beheizung und Isolierung, sowohl für die Wasserbehälter als auch für das Leitungssystem, erforderlich. Außerdem müssen als Bestandteile des Leitungssystems Befüll- und Absaugvorrichtungen sowie Durchbrüche in den Bodenplatten des Zugrohbaus eingebracht werden. Dies ist bei der Konstruktion, bei der Fertigung und bei der späteren Wartung des Zuges mit einem größeren Aufwand verbunden. Ferner sind Wartung und Reinigung von Frisch- und Grauwasserbehältern während der Fahrt des Zuges nicht ohne Weiteres möglich, sodass Wartung und Reinigung oftmals vorfristig durchgeführt werden müssen.

Frischwasser kann Nutzwasser und vor allem Trinkwasser sein. Grauwasser kann Küchenabwässer umfassen.

EP 2 695 812 A1 lehrt einen gattungsgemäßen Wassertrolley gemäß dem Oberbegriff des unabhängigen Patentanspruchs 1. Eine mobile Vorrichtung zur Herstellung von Getränken ist durch EP 2 868 243 A1 offenbart. DE 10 2009 021970 A1 betrifft ein autonomes Wassermodul für Flugzeuge. DE 10 2015 211949 A1 zeigt ein modulares Küchensystem für ein Luftfahrzeug zur Aufnahme von Standard-Transportwagen.

Die Aufgabe besteht also darin, die Ver- und Entsorgung mit und von Wasser in Bordküchen für Verkehrsmittel zu vereinfachen, wobei insbesondere die konstruktive Unterbringung der Frisch- und Grauwasserbehälter sowie die Wartung und Reinigung der Frisch- und Grauwasserbehälter vereinfacht wird.

Erfindungsgemäß wird ein Wassertrolley für eine Bordküche mit einem Frischwasserbehälter und einem Grauwasserbehälter zur Verfügung gestellt.

Ist das im Frischwasserbehälter zur Verfügung gestellte Frischwasser aufgebraucht oder der Grauwasserbehälter voll, so kann der Wassertrolley einfach und unkompliziert gegen einen anderen Wassertrolley, dessen Frischwasserbehälter ausreichend befüllt ist und dessen Grauwasserbehälter genügend leeres Volumen aufweist, getauscht werden. Dies kann während der Fahrt des Zuges oder bei einem Halt des Zuges an einem beliebigen Bahnhof oder an einer Wartungsstation geschehen. Ferner kann der Wassertrolley außer Betrieb genommen werden, wenn eine Reinigung oder Wartung ansteht, selbst wenn sich der Wassertrolley in einem fahrenden Zug befindet. Ferner ist es nicht notwendig, die Wasserbehälter oder von und zu den Wasserbehältern führende Wasserleitungen an der Außenseite des Zuges vorzusehen, sodass eine zusätzliche Beheizung und Isolierung, sowohl für die Wasserbehälter als auch für das Leitungssystem, nicht erforderlich sind. Auch braucht bei der Konstruktion und der Fertigung des Zugrohbaus die Wasserversorgung nicht berücksichtigt zu werden.

Darüber hinaus weist der Frischwasserbehälter einen Befüllanschluss und einen Entnahmeanschluss auf, wobei der Befüllanschluss an einem oberen Ende einer Seitenwand des Frischwasserbehälters und der Entnahmeanschluss an einem unteren Ende der Seitenwand oder einer anderen Seitenwand des Frischwasserbehälters angeordnet sind.

Ein möglicher Vorteil dieser Ausführungsform kann sein, dass Frischwasser zum Befüllen einfach zum Befüllanschluss geleitet werden kann und nicht unter Druck in diesen eingefüllt zu werden braucht. Bei der Entnahme durch den Entnahmeanschluss braucht das Frischwasser nicht mit einer Pumpe aus dem Frischwasserbehälter gefördert werden, sondern kann schlicht durch den Entnahmeanschluss ausfließen.

Des Weiteren weist der Grauwasserbehälter einen Befüllanschluss und einen Entnahmeanschluss auf, wobei der Befüllanschluss an einem oberen Ende einer Seitenwand des Grauwasserbehälters und der Entnahmeanschluss an einem unteren Ende einer anderen Seitenwand des Grauwasserbehälters angeordnet sind. Zumindest einer der Seitenwände kann eine laterale Seitenwand sein, die vertikal ausgerichtet ist, wenn der Wassertrolley an die Anschlussstation angeschlossen ist.

Ein möglicher Vorteil dieser Ausführungsform kann sein, dass Grauwasser zum Einfüllen einfach zum Befüllanschluss geleitet werden kann und nicht unter Druck in diesen eingefüllt zu werden braucht. Bei der Entnahme durch den Entnahmeanschluss braucht das Grauwasser nicht mit einer Pumpe aus dem Grauwasserbehälter gefördert werden, sondern kann schlicht durch den Entnahmeanschluss ausfließen.

Dabei sind der Befüllanschluss mit einer ersten Anschlussrichtung und der Entnahmeanschluss mit einer zweiten Anschlussrichtung ausgebildet, wobei sich die erste Anschlussrichtung von der zweiten Anschlussrichtung unterscheidet. Beispielsweise kann die erste Anschlussrichtung entgegengesetzt oder senkrecht oder unter einem beliebigen Winkel, der sich von null unterscheidet, zur zweiten Anschlussrichtung verlaufen. In der jeweiligen Anschlussrichtung ist der Befüllanschluss oder der Entnahmeanschluss relativ zu einem Wasseranschluss zu bewegen, um den Befüllanschluss oder den Entnahmeanschluss mit dem Wasseranschluss zu verbinden.

Ein möglicher Vorteil dieser Ausführungsform kann sein, dass ein unbeabsichtigtes Anschließen des falschen Anschlusses an den Wasseranschluss vermieden wird. Ferner kann aufgrund der unterschiedlichen Orientierung der Anschlussrichtungen Frischwasser zugefüllt oder Grauwasser entnommen werden, selbst wenn der Wassertrolley noch mit der Bordküche verbunden ist.

Fürderhin sind der Befüllanschluss des Frischwasserbehälters an einer lateralen Seite des Frischwasserbehälters und der Befüllanschluss des Grauwasserbehälters an einer lateralen Seite des Grauwasserbehälters vorgesehen, wobei die laterale Seite des Frischwasserbehälters in eine andere Richtung weist als die laterale Seite des Grauwasserbehälters. Beispielsweise können der Entnahmeanschluss des Frischwasserbehälters und der Befüllanschluss des Grauwasserbehälters an derselben lateralen Seite des Wassertrolleys angeordnet sein, also an lateralen Seiten des Frischwasserbehälters und des Grauwasserbehälters, die in dieselbe Richtung weisen. Der Entnahmeanschluss des Grauwasserbehälters kann an einer lateralen Seite des Grauwasserbehälters angeordnet sein, die in dieselbe Richtung weist, wie die laterale Seite des Frischwasserbehälters, an der dessen Befüllanschluss angeordnet ist.

Ein möglicher Vorteil dieser Ausführungsform kann sein, dass der Wassertrolley einfach durch Verschieben oder Verfahren gleichzeitig mit dem Frischwasseranschluss und mit dem Grauwasseranschluss verbunden werden kann. Ferner kann Grauwasser einfach aus dem Grauwasserbehälter entnommen werden, selbst wenn der Frischwasserbehälter noch Frischwasser leitend mit der Bordküche verbunden ist. Außerdem kann Frischwasser ohne Weiteres in den Frischwasserbehälter eingefüllt werden, selbst wenn der womöglich noch nicht volle Grauwasserbehälter Grauwasser leitend mit der Bordküche verbunden ist. Es kann also unnötig sein, den Wassertrolley zum Befüllen und Entleeren der Wasserbehälter von der Bordküche zu trennen.

Fürderhin sind die Anschlussrichtung des Entnahmeanschlusses des Frischwasserbehälters und die Anschlussrichtung des Befüllanschlusses des Grauwasserbehälters identisch.

Ein möglicher Vorteil dieser Ausführungsform kann sein, dass der Wassertrolley einfach durch Verschieben gleichzeitig mit dem Frischwasseranschluss und mit dem Grauwasseranschluss der Anschlussstation verbunden werden kann.

Die erfindungsgemäße Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Gemäß einer Ausführungsform des Wassertrolleys sind der Befüllanschluss und/oder der Entnahmeanschluss des Frischwasserbehälters oberhalb des Befüllanschlusses und/oder des Entnahmeanschlusses des Grauwasserbehälters angeordnet.

Ein möglicher Vorteil dieser Ausführungsform kann sein, dass beim Anschließen des Wassertrolleys oder durch eine Leckage austretendes Grauwasser nicht mit dem Befüllanschluss und/oder dem Entnahmeanschluss des Frischwasserbehälters in Kontakt kommen kann, sondern aufgrund der Schwerkraft von dem Befüllanschluss und/oder dem Entnahmeanschluss des Frischwasserbehälters wegfließt oder tropft. Eine Kontamination des Frischwassers, das womöglich zur Herstellung von Getränken oder Speisen gedacht ist, mit Grauwasser, das Verunreinigungen aufweisen kann, ist somit verhindert.

Gemäß einer Ausführungsform des Wassertrolleys ist der Frischwasserbehälter zumindest teilweise oder sogar vollständig oberhalb des Grauwasserbehälters angeordnet.

Ein möglicher Vorteil dieser Ausführungsform kann sein, dass durch eine Leckage austretendes Grauwasser nicht mit dem Befüllanschluss und/oder dem Entnahmeanschluss des Frischwasserbehälters in Kontakt kommen kann, sondern aufgrund der Schwerkraft von dem Befüllanschluss und/oder dem Entnahmeanschluss des Frischwasserbehälters wegfließt oder tropft. Eine Kontamination des Frischwassers, das womöglich zur Herstellung von Getränken oder Speisen gedacht ist, mit Grauwasser, das Verunreinigungen aufweisen kann, ist somit verhindert. Ferner liegt der Schwerpunkt des Wassertrolleys bei einem zumindest teilweise oder sogar vollständig befüllten Grauwasserbehälters für den Transport des Wassertrolleys günstig. Ein Umfallen des Wassertrolleys und ein Auslaufen des verschmutzten Grauwassers kann somit vermieden werden.

Gemäß einer Ausführungsform des Wassertrolleys sind der Befüllanschluss und/oder der Entnahmeanschluss des Frischwasserbehälters in einem von außerhalb des Frischwasserbehälters zugänglichen Rücksprung des Frischwasserbehälters angeordnet, und/oder wobei der Frischwasserbehälter einen Frischwasserfüllstandsanzeiger aufweist, der in einer von außerhalb des Frischwasserbehälters einsehbaren Vertiefung des Frischwasserbehälters und/oder des Grauwasserbehälters angeordnet ist.

Ein möglicher Vorteil dieser Ausführungsform kann sein, dass durch die Anordnung im Rücksprung oder in der Vertiefung, beispielsweise eine Mulde oder eine Nut, ein Vorstehen des Befüllanschlusses, des Entnahmeanschluss und/oder des Frischwasserfüllstandsanzeigers vermieden wird, wodurch beim Transport oder beim Anschließen des Wassertrolleys an die Bordküche Kollisionen des Befüllanschlusses, des Entnahmeanschluss und/oder des Frischwasserfüllstandsanzeigers mit anderen Elementen und daraus resultierende Beschädigungen verhindert werden.

Gemäß einer Ausführungsform des Wassertrolleys sind der Befüllanschluss und/oder der Entnahmeanschluss des Grauwasserbehälters in einem von außerhalb des Grauwasserbehälters zugänglichen Rücksprung des Grauwasserbehälters angeordnet, und/oder weist der Grauwasserbehälter einen Grauwasserfüllstandsanzeiger auf, der in einer von außerhalb des Grauwasserbehälters einsehbaren Vertiefung des Grauwasserbehälters angeordnet ist.

Ein möglicher Vorteil dieser Ausführungsform kann sein, dass durch die Anordnung im Rücksprung oder in der Vertiefung, beispielsweise eine Mulde oder eine Nut, ein Vorstehen des Befüllanschlusses, des Entnahmeanschluss und/oder des Grauwasserfüllstandsanzeigers vermieden wird, wodurch beim Transport oder beim Anschließen des Wassertrolleys an die Bordküche Kollisionen des Befüllanschlusses, des Entnahmeanschluss und/oder des Frischwasserfüllstandsanzeigers mit anderen Elementen und daraus resultierende Beschädigungen verhindert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: ein erstes Ausführungsbeispiel eines erfindungsgemäßen Wassertrolleys in einer schematischen Perspektivansicht, und
- Figur 2: ein erstes Ausführungsbeispiel einer erfindungsgemäßen Anschlussstation für einen Wassertrolley in einer schematischen Perspektivansicht.

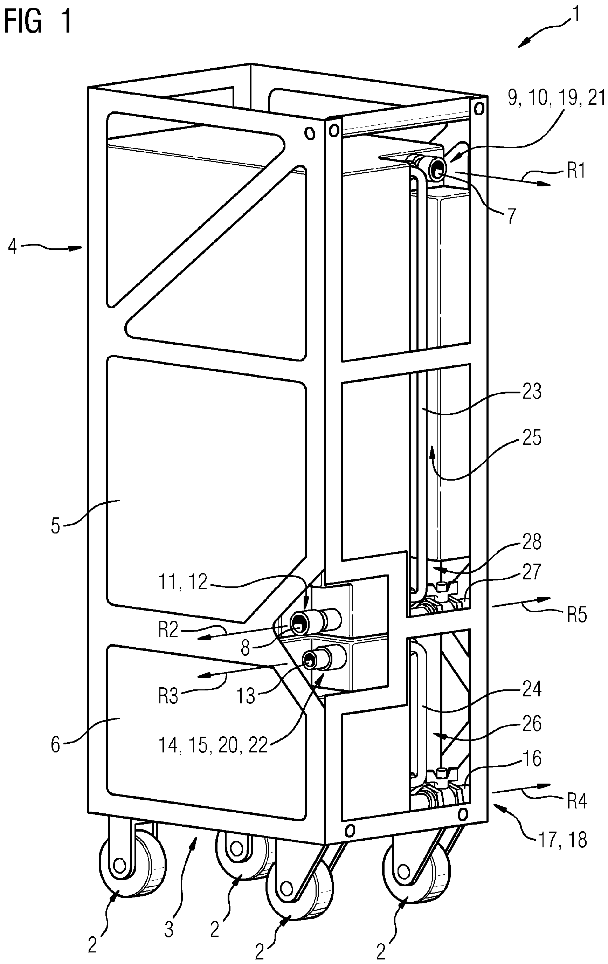

Figur 1 zeigt den erfindungsgemäßen Wassertrolley 1 in einer schematischen Perspektivansicht. Der Wassertrolley 1 ist beispielhaft mit vier Rädern 2 versehen, auf welchen der Wassertrolley 1 seitlich verschiebbar, also verfahrbar, ist. Die Räder 2 sind zum Beispiel an einer Unterseite 3 eines Gehäuses 4 des Wassertrolleys 1 angebracht. Im Gehäuse 4 sind ein Frischwasserbehälter 5 und ein Grauwasserbehälter 6 angeordnet.

Der Frischwasserbehälter 5 des Ausführungsbeispiels weist einen Befüllanschluss 7 und einen Entnahmeanschluss 8 auf. Der Befüllanschluss 7 kann an einem oberen Ende 9 einer Seitenwand 10 des Frischwasserbehälters 5 angeordnet sein. Der Entnahmeanschluss 8 kann an einem unteren Ende 11 einer anderen Seitenwand 12 des Frischwasserbehälters 5 angeordnet sein. Alternativ kann der Entnahmeanschluss 8 auch am unteren Ende der Seitenwand 10 angeordnet sein.

Der Grauwasserbehälter 6 weist einen Befüllanschluss 13 auf, der an einem oberen Ende 14 einer Seitenwand 15 des Grauwasserbehälters 6 angeordnet ist. Ferner weist der Grauwasserbehälter 6 des Ausführungsbeispiels einen Entnahmeanschluss 16 auf, der an einem unteren Ende 17 einer anderen Seitenwand 18 des Grauwasserbehälters 6 angeordnet sein kann. Alternativ kann der Entnahmeanschluss 16 auch am unteren Ende der Seitenwand 15 angeordnet sein.

Zumindest eine der genannten Seitenwände 10, 12, 15, 18 kann eine laterale Seitenwand des jeweiligen Behälters 5, 6 sein, wobei die laterale Seitenwand 10, 12, 15, 18 vertikal ausgerichtet ist, wenn der Wassertrolley 1 auf den Rädern 2 steht. Beispielsweise liegen die unteren Enden der lateralen Seitenwände 10, 12, 15, 18 den oberen Enden der lateralen Seitenwände 10, 12, 15, 18 in der vertikalen Richtung gegenüber. Die Entnahmeanschlüsse 8,16 können so angeordnet sein, dass sie mit einer Innenseite eines Bodens des jeweiligen Behälters 5, 6 fluchten, sodass beim Entleeren der Behälter 5, 6 kein oder nur wenig Restwasser im jeweiligen Behälter 5, 6 verbleibt, auch wenn der Wassertrolley 1 beim Entleeren auf allen Rädern 2 auf einem Untergrund steht, also nicht mit Bezug auf den Untergrund oder mit Bezug auf die Horizontale verkippt ist.

Der Befüllanschluss 7 und/oder der Entnahmeanschluss 8 des Frischwasserbehälters 5 kann oberhalb des Befüllanschlusses 13 oder des Entnahmeanschlusses 16 des Grauwasserbehälters 6 angeordnet sein, insbesondere in der Vertikalen. Beispielsweise ist der Frischwasserbehälter 5 oberhalb des Grauwasserbehälters 6 angeordnet. Alternativ könnte der Frischwasserbehälter 5 zumindest abschnittsweise auch neben dem Grauwasserbehälter 6 angeordnet sein.

Der Befüllanschluss 7 des Frischwasserbehälters 5 kann mit einer ersten Anschlussrichtung R1 und der Entnahmeanschluss 8 kann mit einer zweiten Anschlussrichtung R2 ausgebildet sein, wobei sich die erste Anschlussrichtung R1 von der zweiten Anschlussrichtung R2 unterscheiden kann. Im Ausführungsbeispiel der Figur 1 verlaufen die Anschlussrichtungen R1, R2 im Wesentlichen senkrecht zueinander.

Der Befüllanschluss 13 des Grauwasserbehälters 6 kann mit einer weiteren Anschlussrichtung R3 und der Entnahmeanschluss 16 kann mit noch einer weiteren Anschlussrichtung R4 ausgebildet sein, wobei sich die Anschlussrichtungen R3, R4 voneinander unterscheiden können. Im Ausführungsbeispiel der Figur 1 verlaufen die Anschlussrichtungen R3, R4 im Wesentlichen entgegengesetzt zueinander.

Entlang der jeweiligen Anschlussrichtung R1, R2, R3, R4 kann der jeweilige Anschluss 7, 8, 13, 16 zu einem Gegenstück bewegt werden, um den Anschluss 7, 8, 13, 16 mit dem Gegenanschluss Flüssigkeit leitend zu verbinden.

Die Anschlussrichtung R2 des Entnahmeanschlusses 8 des Frischwasserbehälters 5 entspricht im Wesentlichen der Anschlussrichtung R3 des Befüllanschlusses 13 des Grauwasserbehälters 6. Zum Anschließen des Wassertrolleys 1 an eine Anschlussstation für eine Bordküche kann es also ausreichen, den Wassertrolley 1 relativ zur Anschlussstation entlang der Anschlussrichtungen R2, R3 zu bewegen.

Der Befüllanschluss 7 des Frischwasserbehälters 5 kann an einer im Ausführungsbeispiel der Figur 1 durch die Seitenwand 10 bereitgestellten lateralen Seite 19 vorgesehen sein. Der Befüllanschluss 13 des Grauwasserbehälters 6 kann an einer lateralen Seite 20 des Grauwasserbehälters 6 vorgesehen sein. Die laterale Seite 19 des Frischwasserbehälters 5 kann in eine andere Richtung weisen als die laterale Seite 20 des Grauwasserbehälters 6.

Um zu gewährleisten, dass der Wassertrolley 1 beispielsweise zum Anschluss an die Anschlussstation horizontal verfahr- oder verschiebbar ist, ohne dass der Befüllanschluss 7 und/oder der Entnahmeanschluss 8 des Frischwasserbehälters 5 beziehungsweise der Befüllanschluss 13 und/oder der Entnahmeanschluss 16 des Grauwasserbehälters 6 womöglich durch Kollisionen beschädigt werden, kann der Befüllanschluss 7 und/oder der Entnahmeanschluss 8 des Frischwasserbehälters 5 in einem von außerhalb des Frischwasserbehälters 5 zugänglichen Rücksprung 21 des Frischwasserbehälters 5 angeordnet sein. Alternativ oder zusätzlich kann der Befüllanschluss 13 und/oder der Entnahmeanschluss 16 des Grauwasserbehälters 6 in einem von außerhalb des Grauwasserbehälters 6 zugänglichen Rücksprung 22 des Grauwasserbehälters 6 angeordnet sein.

Um den Füllstand des Frischwasserbehälters 5 und/oder des Grauwasserbehälters 6 erfassen zu können, kann der Frischwasserbehälter 5 einen Frischwasserfüllstandsanzeiger 23 und/oder der Grauwasserbehälter 6 einen Grauwasserfüllstandsanzeiger 24 aufweisen. Der Frischwasserfüllstandsanzeiger 23 und/oder der Grauwasserfüllstandsanzeiger 24 kann als ein zumindest abschnittsweise transparentes Rohr aus Kunststoff oder Glas gefertigt sein, welches sich vom oberen Ende des jeweiligen Behälters 5, 6 bis zu dessen unterem Ende erstreckt und das obere Ende Flüssigkeit leitend mit dem unteren Ende verbindet.

Um kollisionsbedingte Beschädigungen des Frischwasserfüllstandsanzeigers 23 zu verhindern, kann der Frischwasserfüllstandsanzeiger 23 in einer von außerhalb des Frischwasserbehälters 5 einsehbaren Vertiefung 25 angeordnet sein. Die Vertiefung 25 kann sich in der vertikalen Richtung bis zum Rücksprung 21 erstrecken.

Um kollisionsbedingte Beschädigungen des Grauwasserfüllstandsanzeigers 24 zu verhindern, kann der Grauwasserfüllstandsanzeiger 24 in einer von außerhalb des Grauwasserbehälters 6 einsehbaren Vertiefung 26 angeordnet sein.

Zusätzlich zum Entnahmeanschluss 8 des Frischwasserbehälters 5 kann der Frischwasserbehälter 5 noch einen Abflussanschluss 27 aufweisen. Der Abflussanschluss 27 kann mit einer Anschlussrichtung R5 ausgebildet sein, wobei die Anschlussrichtungen R4 und R5 identisch ausgerichtet sein können.

Um ein ungewolltes Auslaufen des Frischwassers und/oder des Grauwassers zu verhindern, können ausgewählte oder alle Anschlüsse und zum Beispiel der Entnahmeanschluss 16 des Grauwasserbehälters 6 und der Abflussanschluss 27 des Frischwasserbehälters 5 als Absperrventile oder als Ventile, die geschlossen sind, wenn kein Gegenstück angeschlossen ist, ausgebildet sein.

Der Abflussanschluss 27 kann in einer Vertiefung 28 des Frischwasserbehälters 5 angeordnet sein, wobei die Vertiefung 28 mit der Vertiefung 25 für den Frischwasserfüllstandsanzeiger 23 verbunden sein kann. Insbesondere kann sich die Vertiefung 25 vom Rücksprung 21 bis zur Vertiefung 28 erstrecken.

Das Gehäuse 4 des Wassertrolleys 1 kann im Wesentlichen vollständig geschlossen sein und lediglich Aussparungen für ausgewählte oder alle Anschlüsse 7, 8, 13, 16, 27 und/oder für die Wasserfüllstandsanzeiger 23, 24 aufweisen. Im Ausführungsbeispiel der Figur 1 ist das Gehäuse 4 jedoch fachwerkartig ausgebildet, wodurch Gewicht eingespart ist und die Anschlüsse 7, 8, 13, 16, 27 und die Wasserfüllstandsanzeiger 23, 24 ohne Weiteres zugänglich sind.

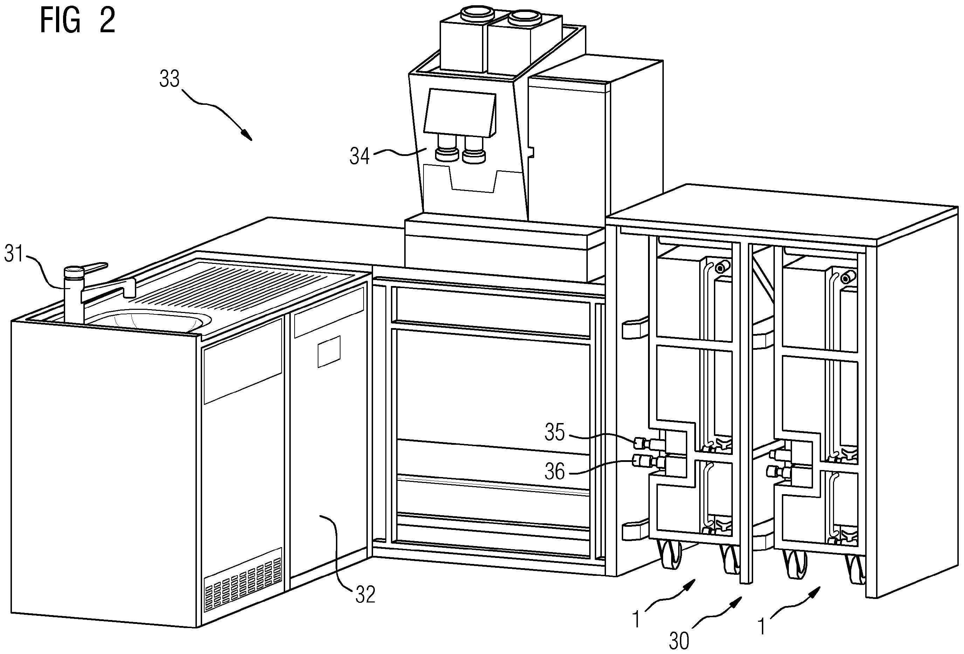

Figur 2 zeigt ein Ausführungsbeispiel einer Anschlussstation 30 zum Anschließen eines Wassertrolleys und beispielsweise des Wassertrolleys 1 an einen Frischwasserverbraucher 31 und an eine Grauwasserquelle 32 einer Bordküche 33. Der Frischwasserverbraucher 31 ist beispielhaft als ein Wasserhahn dargestellt. Als ein weiterer Frischwasserverbraucher ist eine Kaffeemaschine 34 gezeigt. Die Grauwasserquelle 32 ist beispielhaft als eine Spülmaschine dargestellt. Die Spülmaschine kann als weiterer Frischwasserverbraucher Frischwasser leitend mit dem Wassertrolley 1 verbunden sein.

Die Anschlussstation 30 kann ausgebildet sein, zumindest einen Wassertrolley 1 oder sogar mehrere Wassertrolleys 1 mit mindestens einem Frischwasserverbraucher 31 und wenigstens einer Grauwasserquelle 32 Wasser leitend zu verbinden.

Um den zumindest einen Wassertrolley 1 in die Anschlussstation 30 so integrieren zu können, dass der Wassertrolley 1 die Abläufe in der Bordküche 33 nicht behindert, kann die Anschlussstation 30 ausgebildet sein, den zumindest einen Wassertrolley 1 zumindest teilweise oder sogar vollständig aufzunehmen.

Die Anschlussstation 30 weist zumindest einen Frischwasseranschluss 35 auf, der als Gegenstück zum Entnahmeanschluss 8 des Frischwasserbehälters 5 ausgebildet ist. Ferner weist die Anschlussstation 30 einem Grauwasseranschluss 36 auf, der als Gegenstück zum Befüllanschluss 13 des Grauwasserbehälters 6 ausgebildet ist. Die Anschlussstation 30 kann für jeden aufnehmbaren Wassertrolley 1 jeweils zumindest einen Frischwasseranschluss 35 und einen Grauwasseranschluss 36 aufweisen.

Im Ausführungsbeispiel der Figur 1 ist die Anschlussstation 30 ausgebildet, mehrere und insbesondere zwei Wassertrolleys 1 aufzunehmen. Die Anschlussstation 30 weist jedoch nur für einen der Wassertrolleys 1 zumindest einen Frischwasseranschluss 35 und wenigstens einen Grauwasseranschluss 36 auf. Da die Wassertrolleys 1 einfach zu bewegen sind, können die Wassertrolleys 1 abwechselnd oder nacheinander Wasser leitend mit der Anschlussstation 30 verbunden werden, um die Bordküche 33 mit Frischwasserzufuhr und mit Grauwasserabfuhr zu versorgen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Wassertrolley (1) für eine Bordküche (33), mit einem Frischwasserbehälter (5) und einem Grauwasserbehälter (6), wobei der Frischwasserbehälter (5) einen Befüllanschluss (7) und einen Entnahmeanschluss (8) aufweist, wobei der Befüllanschluss (7) an einem oberen Ende (9) einer Seitenwand (10) des Frischwasserbehälters (5) und der Entnahmeanschluss (8) an einem unteren Ende (11) einer Seitenwand (12) des Frischwasserbehälters (5) angeordnet ist, wobei der Grauwasserbehälter (6) einen Befüllanschluss (13) und einen Entnahmeanschluss (16) aufweist, **dadurch gekennzeichnet, dass** der Befüllanschluss (13) an einem oberen Ende (14) einer Seitenwand (15) des Grauwasserbehälters (6) und der Entnahmeanschluss (16) an einem unteren Ende (17) einer anderen Seitenwand (18) des Grauwasserbehälters (6) angeordnet ist, weiter **dadurch gekennzeichnet, dass** der Befüllanschluss (7) des Frischwasserbehälters (5) an einer lateralen Seite (19) des Frischwasserbehälters (5) angeordnet ist, wobei der Befüllanschluss (13) des Grauwasserbehälters (6) an einer lateralen Seite (20) des Grauwasserbehälters (6) angeordnet ist, und wobei die laterale Seite (19) des Frischwasserbehälters (5) in eine andere Richtung weist als die laterale Seite (20) des Grauwasserbehälters (6), wobei der Befüllanschluss (7, 13) mit einer Anschlussrichtung (R1, R3) und der Entnahmeanschluss (8, 16) mit einer anderen Anschlussrichtung (R2, R4) ausgebildet sind, wobei sich die eine Anschlussrichtung (R1, R3) von der anderen Anschlussrichtung (R2, R4) unterscheidet,
wobei die Anschlussrichtung (R2) des Entnahmeanschlusses (8) des Frischwasserbehälters (5) und die Anschlussrichtung (R3) des Befüllanschlusses (13) des Grauwasserbehälters (6) identisch sind.

2. Wassertrolley (1) nach Anspruch 1,
wobei der Befüllanschluss (7) und/oder der Entnahmeanschluss (8) des Frischwasserbehälters (5) in einem von außerhalb des Frischwasserbehälters (5) zugänglichen Rücksprung (21) des Frischwasserbehälters (5) angeordnet sind und/oder wobei der Frischwasserbehälter (5) einen Frischwasserfüllstandsanzeiger (23) aufweist, der in einer von außerhalb des Frischwasserbehälters (5) einsehbaren Vertiefung (25) des Frischwasserbehälters (5) angeordnet ist.

3. Wassertrolley (1) nach einem der Ansprüche 1 oder 2, wobei der Befüllanschluss (13) und/oder der Entnahmeanschluss (16) des Grauwasserbehälters (6) in einem von außerhalb des Grauwasserbehälters (6) zugänglichen Rücksprung (22) des Grauwasserbehälters (6) angeordnet ist und/oder wobei der der Grauwasserbehälter (6) einen Grauwasserfüllstandsanzeiger (24) aufweist, der in einer von außerhalb des Grauwasserbehälters (6) einsehbaren Vertiefung (26) des Grauwasserbehälters (6) angeordnet ist.

## Claims

1. Water trolley (1) for a galley (33), having a fresh-water container (5) and a grey-water container (6), wherein the fresh-water container (5) has a filling connection (7) and a removal connection (8), wherein the filling connection (7) is arranged on an upper end (9) of a side wall (10) of the fresh-water container (5) and the removal connection (8) is arranged on a lower end (11) of a side wall (12) of the fresh-water container (5), wherein the grey-water container (6) has a filling connection (13) and a removal connection (16), **characterized in that** the filling connection (13) is arranged on an upper end (14) of one side wall (15) of the grey-water container (6) and the removal connection (16) is arranged on a lower end (17) of another side wall (18) of the grey-water container (6), further **characterized in that** the filling connection (7) of the fresh-water container (5) is arranged on a lateral side (19) of the fresh-water container (5), wherein the filling connection (13) of the grey-water container (6) is arranged on a lateral side (20) of the grey-water container (6), and wherein the lateral side (19) of the fresh-water container (5) faces in a different direction than the lateral side (20) of the grey-water container (6), wherein the filling connection (7, 13) is formed with one connection direction (R1, R3) and the removal connection (8, 16) is formed with another connection direction (R2, R4), wherein the one connection direction (R1, R3) differs from the other connection direction (R2, R4), wherein the connection direction (R2) of the removal connection (8) of the fresh-water container (5) and the connection direction (R3) of the filling connection (13) of the grey-water container (6) are identical.

2. Water trolley (1) according to Claim 1,
wherein the filling connection (7) and/or the removal connection (8) of the fresh-water container (5) are/is arranged in a recessed portion (21) of the fresh-water container (5), which recessed portion is accessible from outside the fresh-water container (5), and/or wherein the fresh-water container (5) has a fresh-water-fill-level indicator (23) which is arranged in a depression (25) of the fresh-water container (5), which depression is visible from outside the fresh-water container (5).

3. Water trolley (1) according to either of Claims 1 and 2, wherein the filling connection (13) and/or the removal connection (16) of the grey-water container (6) are/is arranged in a recessed portion (22) of the grey-water container (6), which recessed portion is accessible from outside the grey-water container (6), and/or wherein the grey-water container (6) has a grey-water-fill-level indicator (24) which is arranged in a depression (26) of the grey-water container (6), which depression is visible from outside the grey-water container (6).

## Revendications

1. Chariot (1) à eau pour une cuisine (33) de bord, comprenant un récipient (5) d'eau fraiche et un récipient (6) d'eau grise, dans lequel le récipient (5) d'eau fraiche a un raccord (7) de remplissage et un raccord (8) de prélèvement, dans lequel le raccord (7) de remplissage est disposé à une extrémité (9) supérieure d'une paroi (10) latérale du récipient (5) d'eau fraiche et le raccord (8) de prélèvement à une extrémité (11) inférieure d'une paroi (12) latérale du récipient (5) d'eau fraiche, dans lequel le récipient (6) d'eau grise a un raccord (13) de remplissage et un raccord (16) de prélèvement, **caractérisé en ce que** le raccord (13) de remplissage est disposé à une extrémité (14) supérieure d'une paroi (15) latérale du récipient (6) d'eau grise et le raccord (16) de prélèvement à une extrémité (17) inférieure d'une autre paroi (18) latérale du récipient (6) d'eau grise, **caractérisé en outre en ce que** le raccord (7) de remplissage du récipient (5) d'eau fraiche est disposé à un côté (19) latéral du récipient (5) d'eau fraiche, dans lequel le raccord (13) de remplissage du récipient (6) d'eau grise est disposé à un côté (20) latéral du récipient (6) d'eau grise, et dans lequel le côté (19) latéral du récipient (5) d'eau fraiche est tourné dans une direction autre que le côté (20) latéral du récipient (6) d'eau grise, dans lequel le raccord (7, 13) de remplissage est constitué en ayant une direction (R1, R3) de raccord et le raccord (8, 16) de prélèvement en ayant une autre direction (R2, R4) de raccord, la une direction (R1, R3) de raccord étant différente de l'autre direction (R2, R4) de raccord,
dans lequel la direction (R2) de raccord du raccord (8) de prélèvement du récipient (5) d'eau fraiche et la direction (R3) de raccord du raccord (13) de remplissage du récipient (6) d'eau grise sont les mêmes.

2. Chariot (1) à eau suivant la revendication 1,
dans lequel le raccord (7) de remplissage et/ou le raccord (8) de prélèvement du récipient (5) d'eau fraiche sont disposés dans un ressaut (21), accessible de l'extérieur du récipient (5) d'eau fraiche, du récipient (5) d'eau fraiche et/ou dans lequel le récipient (5) a un indicateur (23) de niveau de remplissage d'eau fraiche, qui est disposé dans une cavité (25) du récipient (5) d'eau fraiche visible de l'extérieur du récipient (5) d'eau fraiche.

3. Chariot (1) à eau suivant l'une des revendications 1 ou 2, dans lequel le raccord (13) de remplissage et/ou le raccord (16) de prélèvement du récipient (6) d'eau grise est disposé dans un ressaut (22), accessible de l'extérieur du récipient (6) d'eau grise, du récipient (6) d'eau grise et/ou dans lequel le récipient (6) d'eau grise a un indicateur (24) du niveau de l'eau grise, qui est disposé dans une cavité (26) du récipient (6) d'eau grise visible de l'extérieur du récipient (6) d'eau grise.
